# EUROPEAN PATENT APPLICATION

(11) **EP 2 466 255 A1**
(43) Date of publication of application: **20.06.2012**
(21) Application number: 11191545.0
(22) Date of filing: 01.12.2011
(51) Int. Cl.: G01B 11/16, F03D 7/02, F03D 7/04, F03D 11/00

(54) **Systems for determining deflection of a wind turbine shaft**

(30) Priority: 14.12.2010 US 967319
(71) Applicant: General Electric Company, Schenectady, New York 12345 (US)
(72) Inventor: Eggleston, Eric, Tehachapi, CA California 93561-8188 (US)
(74) Representative: Bedford, Grant Richard

(57) **Abstract**

A system (200,300) for determining deflection in a shaft (134) of a wind turbine (100), the wind turbine having a plurality of rotor blades (112) extending from a hub (110) coupled to the shaft is provided. The system includes an emitter (164) positioned adjacent a first portion of the shaft, the emitter configured to emit a light beam, a receiver (168) positioned adjacent a second portion of the shaft, the receiver configured to receive the light beam emitted from the emitter and determine a location where the light beam strikes the receiver, and a controller communicatively coupled to the receiver, the controller configured for determining deflection of the shaft based on the location on the receiver where the light beam strikes the receiver.

## Description

The subject matter described herein relates generally to wind turbines and, more particularly, to a system for determining deflection of a wind turbine shaft.

Known wind turbines convert the kinetic energy of wind into electrical energy. Wind turbines include one or more blades coupled to a rotatable hub that rotates when oncoming wind strikes the blades. A shaft couples the rotatable hub to a generator. The flow of wind over the wind turbine blades generates lift, induces rotation, and provides torque which is transmitted by the shaft to the generator to generate power. The pitch of the blades is controlled by a pitch assembly which couples the blades to a rotatable hub.

During operation of the wind turbine, one or more of the blades may be subjected to different wind conditions. These different wind conditions may result in varying forces being applied by the blades onto the rotatable hub. The rotatable hub in turn transmits these bending moments to the shaft, causing periodic deflection of the shaft.

In one aspect according to the present invention, a system for determining deflection in a shaft of a wind turbine is provided. The wind turbine has a plurality of rotor blades extending from a hub coupled to the shaft. The system comprises an emitter, a receiver, and a controller. The emitter is positioned adjacent a first portion of the shaft and configured to emit a light beam. The receiver is positioned adjacent a second portion of the shaft and is configured to receive the light beam emitted from the emitter and determine a location where the light beam strikes the receiver. The controller is communicatively coupled to the receiver and is configured for determining deflection of the shaft based on the location on the receiver where the light beam strikes the receiver.

In another aspect, a system for adjusting a pitch angle of at least one rotor blade in a wind turbine based on deflection of a shaft is provided. The at least one rotor blade extends from a hub coupled to the shaft. The system comprises an emitter, a receiver, and a controller. The emitter is positioned adjacent a first portion of the shaft and is configured to emit photons. The receiver is positioned adjacent a second portion of the shaft and is configured to receive photons emitted from the emitter and determine a location on the receiver where the photons strike the receiver. The controller is communicatively coupled to the receiver and configured to determine deflection of the shaft based on the location on the receiver where the photons strike the receiver. The controller is also configured to adjust the pitch angle of the at least one rotor blade based on the determined deflection of the shaft to reduce deflection of the shaft.

In another aspect, a method for of determining deflection of a shaft and adjusting a pitch angle of at least one rotor blade in a wind turbine based on the determined deflection of the shaft is provided. The at least one rotor blade extends from a hub coupled to the shaft. The method comprises determining, with a controller, a deflection of the shaft based on a location on a receiver where photons emitted from an emitter strike the receiver. A controller adjusts a pitch angle of the at least one rotor blade based at least in part on the determined deflection of the shaft to reduce deflection of the shaft.

Various aspects and embodiments of the present invention will now be described in connection with the accompanying drawings, in which:
Fig. 1 is a side perspective view of an exemplary wind turbine.
Fig. 2 is a partial sectional view of an exemplary nacelle suitable for use with the wind turbine shown in Fig. 1.
Fig. 3A is a side view of a rotor shaft shown in Fig. 2 and an emitter and a receiver positioned adjacent the rotor shaft.
Fig. 3B is a side view of rotor shaft shown in Fig. 3A in a deflected state.
Figs. 4A-4C are plan views of exemplary embodiments of receivers showing different patterns of photons emitted by the emitter of Fig. 3A.
Fig. 5 is a side view of the rotor shaft shown in Fig. 2 with an emitter and a receiver positioned adjacent the shaft in locations different from those of Fig. 3A.
Fig. 6 is a flow diagram depicting a method of determining an angular position of a rotor blade to reduce deflection of the shaft shown in Fig. 3A.

Various of the embodiments set forth herein describe systems used to measure deflection of a rotor shaft in a wind turbine that couples a rotatable hub to a generator. As used herein, the term "deflection" refers to the displacement of a structural member because of the application of one or more loads to the member. It has been determined that different rotor blades in a wind turbine may be subjected to conditions with winds having differing velocity and/or direction. Such conditions may result in the application of bending moments to the rotor shaft and deflection of the rotor shaft.

In the embodiments described here, the measured deflection of the rotor shaft is used to determine a pitch angle of at least one of the rotor blades coupled to the rotatable hub. The determined pitch angle reduces the magnitude of deflection of the rotor shaft. To determine the deflection of the rotor shaft, the system uses a controller and an emitter of a light beam (e.g., a laser, a light-emitting diode, an infrared light-emitting diode, or any other suitable light source) and receiver coupled to the rotor shaft. The controller determines the deflection of the rotor shaft based on where the light beam strikes the receiver.

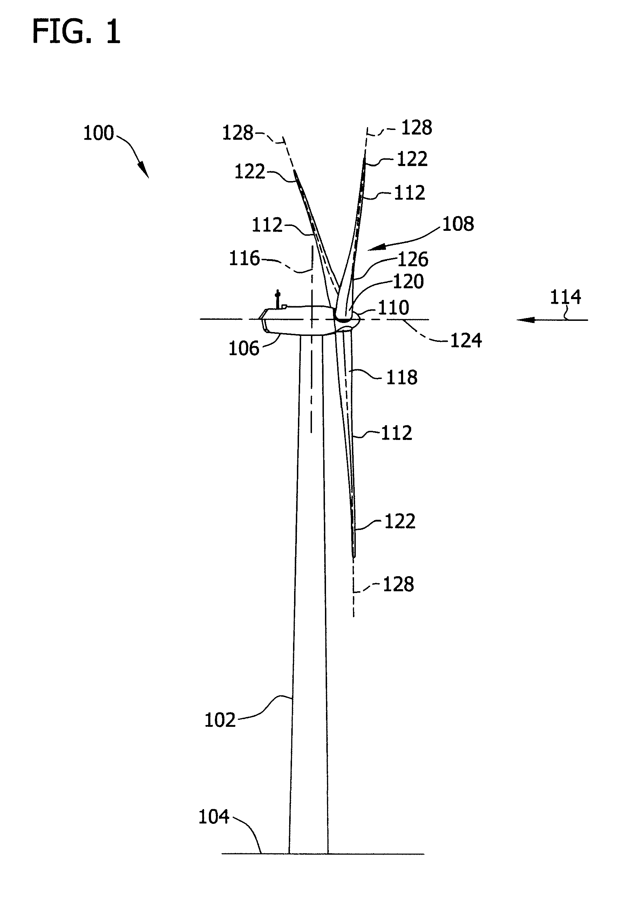

Fig. 1 is a schematic view of an exemplary wind turbine 100. In the exemplary embodiment, wind turbine 100 is a horizontal-axis wind turbine. Alternatively, wind turbine 100 may be a vertical-axis wind turbine. In the exemplary embodiment, wind turbine 100 includes a tower 102 extending from and coupled to a foundation 104. Tower 102 may be coupled to foundation 104 with anchor bolts via a foundation mounting part (not shown) encased within foundation 104, for example.

A nacelle 106 is coupled to tower 102, and a rotor 108 is coupled to nacelle 106. Rotor 108 includes a rotatable hub 110 and a plurality of rotor blades 112 coupled to hub 110. In the exemplary embodiment, rotor 108 includes three rotor blades 112.

Alternatively, rotor 108 may have any suitable number of rotor blades 112 that enables wind turbine 100 to function as described herein. Tower 102 may have any suitable height and/or construction that enables wind turbine 100 to function as described herein.

Rotor blades 112 are spaced about hub 110 to facilitate rotating rotor 108, thereby transferring kinetic energy from wind 114 into usable mechanical energy, and subsequently, electrical energy. Rotor 108 and nacelle 106 are rotated about tower 102 on a yaw axis 116 to control a perspective of rotor blades 112 with respect to a direction of wind 114. Rotor blades 112 are mated to hub 110 by coupling a rotor blade root portion 118 to hub 110 at a plurality of load transfer regions 120. Load transfer regions 120 each have a hub load transfer region and a rotor blade load transfer region (both not shown in Fig. 1). Loads induced to rotor blades 112 are transferred to hub 110 via load transfer regions 120. Each rotor blade 112 also includes a rotor blade tip portion 122.

In the exemplary embodiment, rotor blades 112 have a length of between approximately 30 meters (m) (99 feet (ft)) and approximately 120 m (394 ft). Alternatively, rotor blades 112 may have any suitable length that enables wind turbine 100 to function as described herein. For example, rotor blades 112 may have a suitable length less than 30 m or greater than 120 m. As wind 114 contacts rotor blade 112, lift forces are induced to rotor blade 112 and rotation of rotor 108 about an axis of rotation 124 is induced as rotor blade tip portion 122 is accelerated.

A pitch angle (not shown) of rotor blades 112, i.e., an angle that determines the perspective of rotor blade 112 with respect to the direction of wind 114, may be changed by a pitch assembly (not shown in Fig. 1). More specifically, increasing a pitch angle of rotor blade 112 decreases an amount of rotor blade surface area 126 exposed to wind 114 and, conversely, decreasing a pitch angle of rotor blade 112 increases an amount of rotor blade surface area 126 exposed to wind 114. The pitch angles of rotor blades 112 are adjusted about a pitch axis 128 at each rotor blade 112. In the exemplary embodiment, the pitch angles of rotor blades 112 are controlled individually.

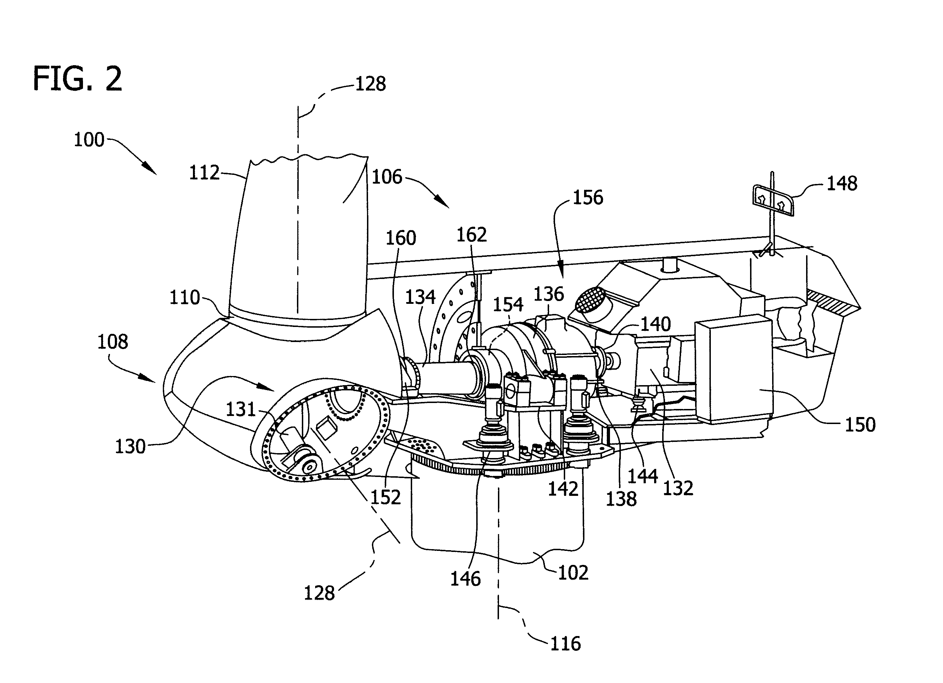

Fig. 2 is a partial sectional view of nacelle 106 of exemplary wind turbine 100 (shown in Fig. 1). Various components of wind turbine 100 are housed in nacelle 106. In the exemplary embodiment, hub 110 includes three pitch assemblies 130. Each pitch assembly 130 is coupled to an associated rotor blade 112 (shown in Fig. 1), and modulates a pitch of an associated rotor blade 112 about pitch axis 128. Only one of three pitch assemblies 130 is shown in Fig. 2. In the exemplary embodiment, each pitch assembly 130 includes at least one pitch drive motor 131. In other embodiments, each pitch assembly may include hydraulic motors or other components to modulate the pitch of an associated rotor blade 112.

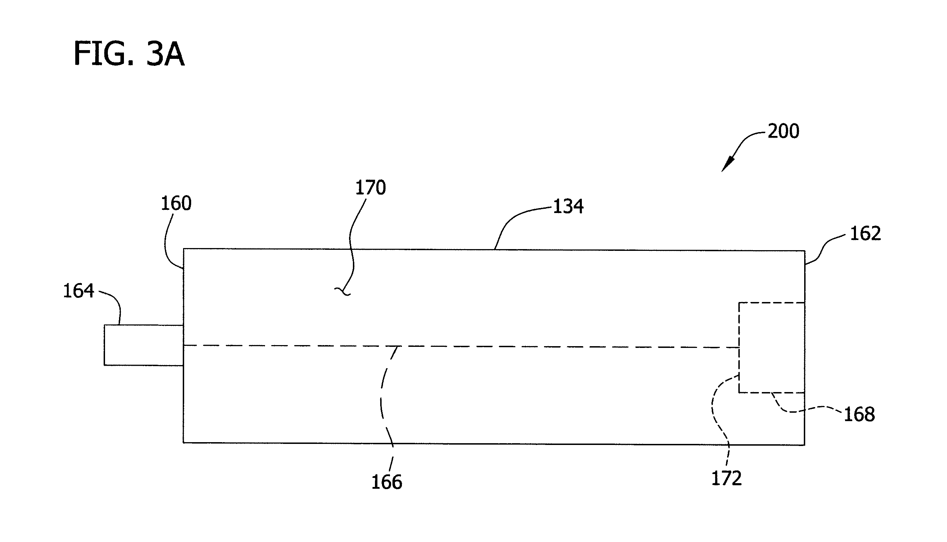

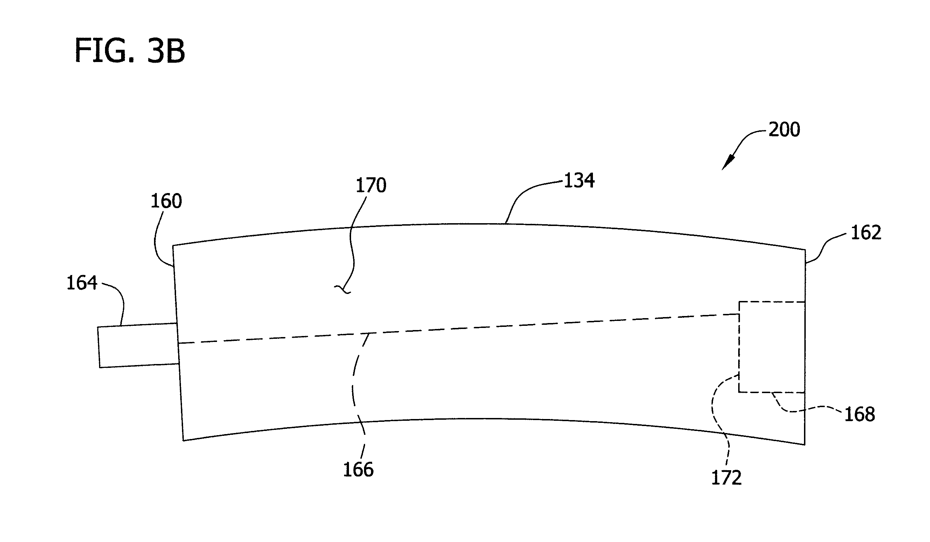

As shown in Fig. 2, rotor 108 is rotatably coupled to an electric generator 132 positioned within nacelle 106 via a rotor shaft 134 (sometimes referred to as either a main shaft or a low speed shaft), a gearbox 136, a high speed shaft 138, and a coupling 140. Rotor shaft 134 has a first end 160 adjacent rotor 108 and an opposing, second end 162 adjacent gearbox 136. Rotor shaft has an interior cavity 170 (Fig. 3) that is substantially hollow. Rotor shaft 134 is discussed in greater detail below in relation to Figs. 3-6. Rotation of rotor shaft 134 rotatably drives gearbox 136 that subsequently drives high speed shaft 138, although in other embodiments gearbox 136 may not be used. High speed shaft 138 rotatably drives generator 132 via coupling 140 and rotation of high speed shaft 138 facilitates production of electrical power by generator 132. Gearbox 136 is supported by a support 142 and generator 132 is supported by a support 144. In the exemplary embodiment, gearbox 136 utilizes a dual-path or multi-path geometry to drive high speed shaft 138. Alternatively, rotor shaft 134 is coupled directly to generator 132 via coupling 140.

Nacelle 106 also includes a yaw drive mechanism 146 that rotates nacelle 106 and rotor 108 about yaw axis 116 to control the perspective of rotor blades 112 with respect to the direction of wind 114. Nacelle 106 also includes at least one meteorological mast 148 that includes a wind vane and anemometer (neither shown in Fig. 2). In one embodiment, meteorological mast 148 provides information, including wind direction and/or wind speed, to a turbine control system 150. Turbine control system 150 includes one or more controllers or other processors configured to execute control algorithms. As used herein, the term "processor" includes any programmable system including systems and microcontrollers, reduced instruction set circuits (RISC), application specific integrated circuits (ASIC), programmable logic circuits (PLC), and any other circuit capable of executing the functions described herein. The above examples are exemplary only, and thus are not intended to limit in any way the definition and/or meaning of the term processor. Moreover, turbine control system 150 may execute a SCADA (Supervisory, Control and Data Acquisition) program.

Pitch assembly 130 is operatively coupled to turbine control system 150. In the exemplary embodiment, nacelle 106 also includes forward support bearing 152 and aft support bearing 154. Forward support bearing 152 and aft support bearing 154 facilitate radial support and alignment of rotor shaft 134. Forward support bearing 152 is coupled to rotor shaft 134 near hub 110. Aft support bearing 154 is positioned on rotor shaft 134 near gearbox 136 and/or generator 132. Nacelle 106 may include any number of support bearings that enable wind turbine 100 to function as disclosed herein. Rotor shaft 134, generator 132, gearbox 136, high speed shaft 138, coupling 140, and any associated fastening, support, and/or securing device including, but not limited to, support 142, support 144, forward support bearing 152, and aft support bearing 154, are sometimes referred to as a drive train 156.

Figs. 3A and 3B are enlarged views of rotor shaft 134 and a system 200 for determining deflection of rotor shaft 134, with the other above-described components of wind turbine 100 removed for the sake of clarity. System 200 includes an emitter 164 for emitting photons 166 and a receiver 168 for receiving the photons emitted by emitter. Emitter 164 and receiver 168 are positively fixed and/or coupled to rotor shaft 134 such that deflections of rotor shaft 134 are transmitted to emitter 164 and receiver 168. System 200 can also include turbine control system 150 or a similar computing device may instead be used in system 200.

Fig. 3A shows system 200 in an initial state where rotor shaft 134 is not deflected. Fig. 3B shows system 200 in a deflected state which is greatly exaggerated for the sake of clarity. In Fig. 3B, rotor shaft 134 is deflected and photons emitted by emitter 164 strike receiver 168 in a location different from where photons strike receiver 168 in Fig. 3A.

The photons 166 emitted by emitter 164 may have a wavelength such that they are visible by the unaided human eye (e.g., a wavelength from about 380 nanometers to about 780 nanometers). Alternatively, the emitted photons 166 may have a wavelength such that they are not visible by the unaided human eye (e.g., a wavelength less than about 380 nanometers or greater than about 780 nanometers).

Emitter 164 is positioned adjacent first end 160 of rotor shaft 134 and receiver 168 is positioned adjacent second end 162 of rotor shaft 134. In other embodiments, emitter 164 is positioned adjacent second end 162 of rotor shaft 134 and receiver 168 is positioned adjacent first end 160 of rotor shaft 134. The phrase "positioned adjacent" is used herein to describe the relative position of emitter 164 and/or receiver 168 (or other components) to rotor shaft 134. This phrase encompasses instances where emitter 164 and/or receiver 168 is positioned within an interior cavity 170 of rotor shaft 134 and adjacent first end 160 or second end 162 of rotor shaft 134. This phrase also encompasses instances where emitter 164 and/or receiver 168 is positioned on an exterior of rotor shaft 134 and adjacent first end 160 or second end 162 of rotor shaft 134. In the exemplary embodiment, emitter 164 is positioned such that it is on the exterior of and adjacent first end 160 of rotor shaft 134. Receiver 168 is positioned such that it is within interior cavity 170 of rotor shaft 134 and adjacent second end 162 of rotor shaft 134. In other embodiments, emitter 164 is positioned within interior cavity 170 of rotor shaft 134 and/or receiver 168 is positioned such that it is on the exterior of and adjacent to second end 162 of rotor shaft 134.

Emitter 164 and receiver 168 are communicatively coupled to turbine control system 150 (i.e., a "controller") by any suitable communication system (e.g., wired, wireless, and/or infrared communication systems). Turbine control system 150 is thus operable to control operation of emitter 164 and receiver 168. In other embodiments, a separate controller (not shown) is communicatively coupled to emitter 164 and receiver 168 and is thus used to control operation of emitter 164 and receiver 168.

In the exemplary embodiment, emitter 164 is a laser or other similar device for emitting photons 166. Receiver 168 has a surface 172 upon which photons 166 emitted by emitter 164 are received. Receiver 168 is operable to detect the location on surface 172 photons 166 emitted by emitter 164 that have struck surface 172. For example, receiver 168 may be a photo-diode, charge-coupled array, or other similar device that is operable to detect where photons 166 emitted by emitter 164 have struck a surface thereof. A lens (not shown) may also be positioned between emitter 164 and receiver 168 such that photons 166 emitted from emitter 164 pass through the lens before striking surface 172 of receiver 168. The lens may be a converging and/or diverging lens according to one embodiment.

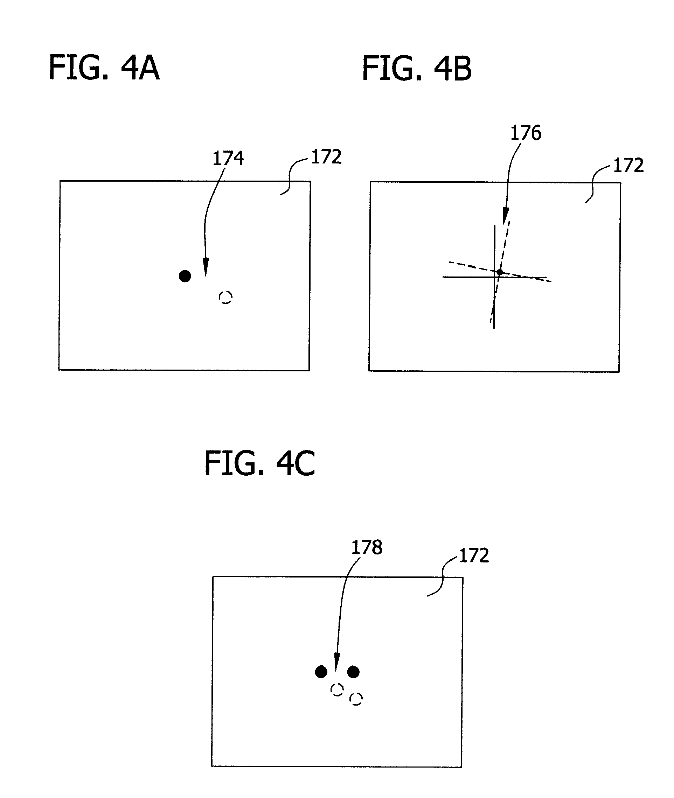

Emitter 164 is configured to emit photons 166 therefrom in a predetermined two-dimensional pattern. Figs. 4A-4C depict three exemplary two-dimensional patterns 174, 176, 178 of photons 166 as they appear while striking surface of receiver 168. In each of the patterns 174, 176, 178, the location of the pattern on surface 172 of receiver 168 when rotor shaft 134 is in an initial state and not deflected is shown in solid lines. The location of patterns 174, 176, 178 on surface 172 of receiver 168 when rotor shaft 134 is deflected such as shown in Fig. 3B by an exemplary amount is shown in phantom lines.

In the first pattern 174 shown in Fig. 4A, photons are emitted in a pattern such that they are in the form of a circle when they strike surface 172 of receiver 168. Photons are emitted in the second pattern 176 shown in Fig. 4B such they are in the form of two intersecting lines when they strike surface 172 of receiver 168. In the exemplary embodiment of Fig. 4B, the lines intersect at a right angle, while in other embodiments the lines may be non-intersecting (i.e., parallel) or intersect at an angle other than a right angle. In the third pattern 176 shown in Fig. 4C, photons are emitted in a pattern such that they are in the form of two distinct dots or circles when they strike surface 172 of receiver 168. These patterns 174, 176, 178 described above are exemplary in nature, and as such any number of different geometric patterns may be used without departing from the scope of the embodiments. Moreover, emitter 164 may be configured to emit photons 166 such that photons 166 strike surface 172 of receiver 168 at a single point.

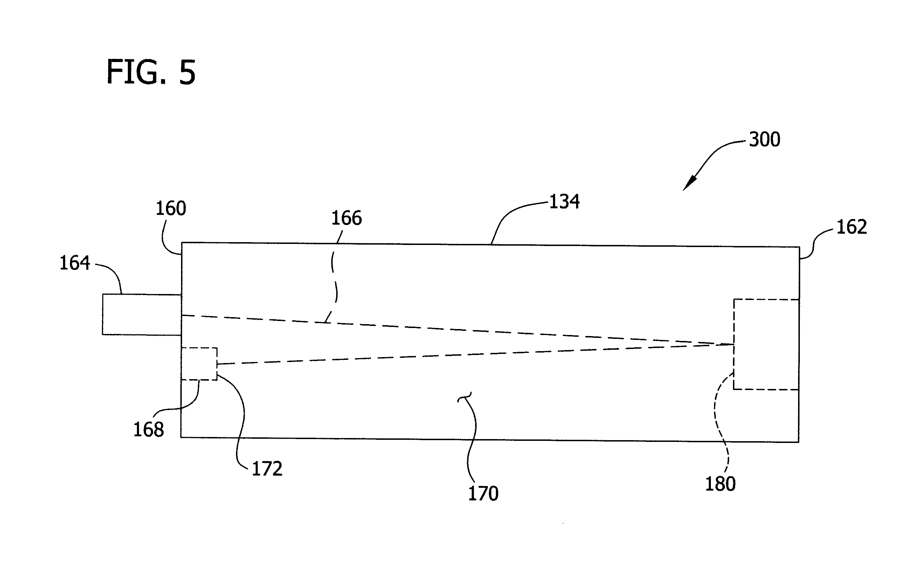

Fig. 5 depicts a system 300 similar to system 200, and as such like reference numerals are used to refer to like elements. However, in system 300, a mirror 180 (i.e., a reflector) is positioned adjacent second end 162 of rotor shaft 134. Both emitter 164 and receiver 168 are positioned adjacent first end 160 of rotor shaft 134. Mirror 180 is configured to reflect photons 166 emitted from emitter 164 to receiver 168 such that photons 166 strike surface 172 of receiver 168. Mirror 180 may be any type of suitable mirror, such as a flat plate mirror.

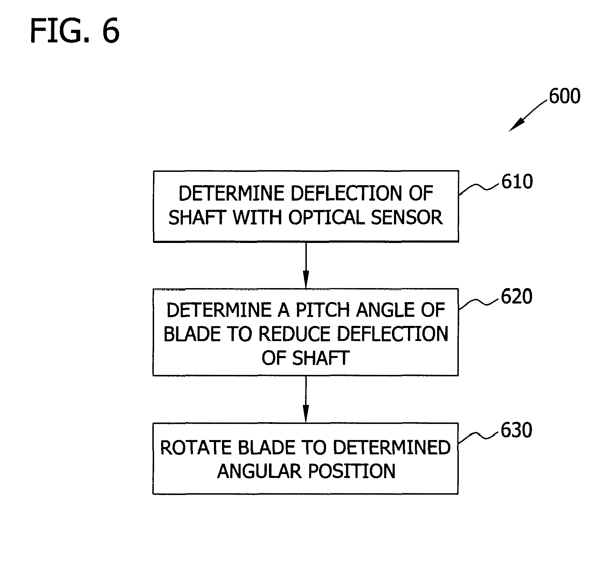

Fig. 6 depicts a method 600 of determining a deflection of rotor shaft 134 to adjust an angular position of rotor blade 112 to reduce deflection of rotor shaft 134. Method 600 is used in the exemplary embodiment while wind turbine 100 is operating and rotor blades 112 are rotating. In other embodiments, method 600 may be used when rotor blades 112 are at rest. Moreover, while method 600 is described herein as being performed by wind turbine controller 150, any suitable controller may be used.

Method 600 begins with the use of system 200 or 300 to determine 610 the deflection of rotor shaft 134. To make this determination 610, turbine control system 150 (i.e., a controller) compares a first location where photons 166 emitted by emitter 164 strike surface 172 of receiver 168 to a second location where photons 166 emitted by emitter 164 strike surface 172 of receiver 168 when rotor shaft 134 is in an initial state. In the exemplary embodiment, this initial state of rotor shaft 134 is a state where rotor shaft 134 is not subject to deflection by forces applied to rotor shaft 134 by hub 110. In this initial state, photons 166 in the exemplary embodiment strike surface 172 of receiver 168 in a pattern such as those represented by solid lines in patterns 174, 176, 178 shown in Figs. 4A-4C. Turbine control system 150 may be calibrated when rotor shaft 134 is in its initial state such that the location of where photons 166 strike surface 172 of receiver 168 in this state is stored for use in making determination 610.

When rotor shaft 134 is deflected such as shown in Fig. 3B, the position of emitter 164 relative to receiver 168 is changed such that photons 166 emitted by emitter 164 do not strike surface 172 of receiver 168 in the same location as they do when rotor shaft 134 is in its initial state. Such exemplary locations are shown above in phantom lines in patterns 174, 176, 178 of Figs. 4A-4C.

Accordingly, to make determination 610, turbine control system 150 compares the first location to the second location as described above. In doing so, turbine control system 150 analyzes the distance and direction between the two locations to determine the displacement between the two locations. Turbine control system 150 is also operable to determine the angular displacement between the two locations when photons 166 are emitted in a pattern such as the patterns 176, 178 shown in Figs. 4B and 4C. Control system 150 is thus operable to determine a rotational (i.e., torsional) deflection of rotor shaft 134.

Based on the determined displacement between the locations, turbine control system 150 determines the deflection of rotor shaft 134 according to any of several known methods. Turbine control system 150 is then able to determine the magnitude and direction of forces applied to rotor shaft 134 by hub 110 utilizing the deflection determination.

Turbine control system 150 determines 620 a pitch angle or offset thereof of at least one of rotor blades 112 to reduce the deflection of rotor shaft 134. Based on the determined deflection, the pitch angle of rotor blade 112 is either decreased (such that rotor blade 112 generates less lift) or increased (such that rotor blade 112 generates more lift). Moreover, in other embodiments the magnitude and direction of forces applied to rotor shaft 134 by hub 110 may not be determined. Instead, the pitch angle of rotor blades 112 is adjusted by a predetermined offset (e.g., one or more degrees or fractions thereof) to minimize the deflection of rotor shaft 134 via successive approximation or tuning of control gains.

According to one example, one rotor blade 112 is subjected to winds having a greater velocity than the winds to which other rotor blades 112 are subjected, greater force is applied by the one rotor blade 112 to hub 100 than that applied by other blades 112 to hub 110. This increased force may result in deflection of rotor shaft 134 because of the thrust being generated by rotor blades 112 not being centered on hub 110.

Turbine control system 150 determines 620 a pitch angle for the one rotor blade 112 that is less than the pitch angle of the other blades 112. This determined 620 pitch angle of the one rotor blade 112 will thus result in this rotor blade 112 generating less lift such that it will not apply greater force to hub 110 than the force applied by the other blades 112 and thrust generated by rotor blades 112 will be centered on hub 110. Accordingly, deflection of rotor shaft 134 will be either reduced or eliminated.

After determining 620 the pitch angle or of at least one rotor blade 112, rotor blade 112 is rotated 630 such that its pitch angle equals the determined 620 pitch angle or offset. The rotor blade is rotated 630 by pitch drive motor 131 coupled to rotor blade 112. Pitch drive motor 131 is in turn communicatively coupled to turbine control system 150, and as such turbine control system 150 is operable to control adjustment of pitch angle or offset of rotor blade 112.

Method 600 may be performed multiple times per second, such that the pitch angle of rotor blades 112 may be adjusted multiple times per second. Moreover, method 600 may be performed for each individual rotor blade 112 multiple times per second.

The examples used herein are illustrative only, and are not meant to be limited to the elements of those examples. Certain of the above-described embodiments provide an efficient and cost-effective system for reducing and/or eliminating deflection of a rotor shaft in a wind turbine. Various of the systems and methods can also provide for the determination of deflection in a rotor shaft. Based on this determined deflection, a pitch angle of rotor blades is adjusted to reduce or eliminate the deflection (whether by bending or torsion) of the rotor shaft.

Exemplary embodiments of a wind turbine, a system for determining deflection in a rotor shaft, and a method of adjusting the pitch angle of rotor blades based on the deflection are described above in detail. The wind turbine and system are not limited to the specific embodiments described herein, but rather, components of the turbine and/or system and/or steps of the method may be utilized independently and separately from other components and/or steps described herein. For example, the system may also be used in combination with other systems and methods, and is not limited to practice with only the wind turbine and method as described herein. Rather, the exemplary embodiment can be implemented and utilized in connection with many other wind turbine applications. For example, the measured deflection of the rotor shaft may be used during control of other components of the wind turbine. In one embodiment, the measured deflection is used, at least in part, to control the yaw angle of the wind turbine. In other embodiments, the measured deflection is used, at least in part, to control the frequency of adjustments to the pitch angle of one or more rotor blades.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system for determining deflection in a shaft of a wind turbine, the wind turbine having a plurality of rotor blades extending from a hub coupled to the shaft, said system comprising:
   an emitter positioned adjacent a first portion of the shaft, said emitter configured to emit a light beam;
   a receiver positioned adjacent a second portion of the shaft, said receiver configured to receive the light beam emitted from said emitter and determine a location where the light beam strikes said receiver; and
   a controller communicatively coupled to said receiver, said controller configured for determining deflection of the shaft based on the location on said receiver where the light beam strikes said receiver.
2. A system in accordance with clause 1, wherein said emitter comprises a laser.
3. A system in accordance with any preceding clause, wherein said receiver comprises at least one of a photo-diode and a charge-coupled array.
4. A system in accordance with any preceding clause, wherein said emitter is positioned adjacent a first end of the shaft and said receiver is positioned adjacent an opposing, second end of the shaft.
5. A system in accordance with any preceding clause, wherein said emitter is configured to emit light beams comprising photons in a geometric pattern such that said receiver is operable to determine at least one of a bending and torsional deflection of the shaft.
6. A system in accordance with any preceding clause, wherein the geometric pattern includes at least two intersecting lines.
7. A system in accordance with any preceding clause, further comprising a reflector positioned in a third portion of the shaft, said reflector configured for reflecting light beams emitted by said emitter into said receiver.
8. A system in accordance with any preceding clause, further comprising a lens positioned in a third portion of the shaft, said lens configured for one of converging and diverging light beams emitted from said emitter before the photons are received by said receiver.
9. A system for adjusting a pitch angle of at least one rotor blade in a wind turbine based on deflection of a shaft, the at least one rotor blade extending from a hub coupled to the shaft, said system comprising:
   an emitter positioned adjacent a first portion of the shaft, said emitter configured to emit photons;
   a receiver positioned adjacent a second portion of the shaft, said receiver configured to receive photons emitted from said emitter and determine a location on said receiver where the photons strike said receiver; and,
   a controller communicatively coupled to said receiver, said controller configured to determine deflection of the shaft based on the location on said receiver where the photons strike said receiver, said controller also configured to adjust the pitch angle of the at least one rotor blade based on the determined deflection of the shaft to reduce deflection of the shaft.
10. A system in accordance with any preceding clause, wherein said emitter is positioned adjacent a first end of the shaft and said receiver is positioned adjacent an opposing, second end of the shaft.
11. A system in accordance with any preceding clause, wherein said emitter is configured to emit photons in a geometric pattern such that said receiver is operable to determine a rotational deflection of the shaft.
12. A system in accordance with any preceding clause, wherein said controller is configured to adjust the pitch angle of the at least one rotor blade by communicating a desired pitch angle of the at least one rotor blade to a pitch controller communicatively coupled to a pitch drive for controlling the pitch angle of the at least one rotor blade.
13. A system in accordance with any preceding clause, wherein said emitter is positioned adjacent a first end of the shaft and said receiver is positioned adjacent the first end of the shaft.
14. A system in accordance with any preceding clause, further comprising a reflector positioned adjacent an opposing, second end of the shaft, said reflector configured for reflecting photons emitted by said emitter into said receiver.
15. A system in accordance with any preceding clause, wherein said emitter is positioned adjacent a first section of a first end of the shaft and said receiver is positioned adjacent a second section of the first end of the shaft, and wherein said reflector is positioned adjacent an opposing, second end of the shaft.
16. A system in accordance with any preceding clause, further comprising at least one lens positioned in a third portion of the shaft, said at least one lens configured for at least one of converging and diverging photons emitted from said emitter before the photons are received by said receiver.
17. A method of determining deflection of a shaft and adjusting a pitch angle of at least one rotor blade in a wind turbine based on the determined deflection of the shaft, the at least one rotor blade extending from a hub coupled to the shaft, said method comprising:
   determining, with a controller, a deflection of the shaft based on a location on a receiver where photons emitted from an emitter strike the receiver; and,
   adjusting, with the controller, a pitch angle of the at least one rotor blade based at least in part on the determined deflection of the shaft to reduce deflection of the shaft.
18. A method in accordance with any preceding clause, wherein adjusting the pitch angle of the at least one rotor blade comprises communicating a desired pitch angle of the at least one rotor blade to a pitch controller communicatively coupled to a pitch drive for controlling the pitch angle of the at least one rotor blade.
19. A method in accordance with any preceding clause, further comprising, prior to determining the deflection of the shaft, emitting photons from the emitter.
20. A method in accordance with any preceding clause, further comprising receiving photons from the emitter with the receiver.

## Claims

1. A system (200,300) for determining deflection in a shaft (134) of a wind turbine (100), the wind turbine having a plurality of rotor blades (112) extending from a hub (110) coupled to the shaft, said system comprising:
an emitter (164) positioned adjacent a first portion of the shaft, said emitter configured to emit a light beam;
a receiver (168) positioned adjacent a second portion of the shaft, said receiver configured to receive the light beam emitted from said emitter and determine a location where the light beam strikes said receiver; and
a controller communicatively coupled to said receiver, said controller configured for determining deflection of the shaft based on the location on said receiver where the light beam strikes said receiver.

2. A system (200,300) in accordance with claim 1, wherein said emitter (164) comprises a laser.

3. A system (200,300) in accordance with any preceding claim, wherein said receiver (168) comprises at least one of a photo-diode and a charge-coupled array.

4. A system (200,300) in accordance with any preceding claim, wherein said emitter (164) is positioned adjacent a first end (160) of the shaft (134) and said receiver (168) is positioned adjacent an opposing, second end (162) of the shaft.

5. A system (200,300) in accordance with any preceding claim, wherein said emitter (164) is configured to emit light beams comprising photons in a geometric pattern such that said receiver is operable to determine at least one of a bending and torsional deflection of the shaft (134).

6. A system (200,300) in accordance with claim 5, wherein the geometric pattern includes at least two intersecting lines.

7. A system (200,300) in accordance with any preceding claim, further comprising a reflector positioned in a third portion of the shaft (134), said reflector configured for reflecting light beams emitted by said emitter (164) into said receiver (168).

8. A system (200,300) in accordance with any preceding claim, further comprising a lens positioned in a third portion of the shaft (134), said lens configured for one of converging and diverging light beams emitted from said emitter (164) before the photons are received by said receiver (168).

9. A system (200,300) for adjusting a pitch angle of at least one rotor blade (112) in a wind turbine (100) based on deflection of a shaft (134), the at least one rotor blade extending from a hub (110) coupled to the shaft, said system comprising:
an emitter (164) positioned adjacent a first portion of the shaft, said emitter configured to emit photons;
a receiver (168) positioned adjacent a second portion of the shaft, said receiver configured to receive photons emitted from said emitter and determine a location on said receiver where the photons strike said receiver; and,
a controller communicatively coupled to said receiver, said controller configured to determine deflection of the shaft based on the location on said receiver where the photons strike said receiver, said controller also configured to adjust the pitch angle of the at least one rotor blade based on the determined deflection of the shaft to reduce deflection of the shaft.

10. A system (200,300) in accordance with claim 9, wherein said emitter (164) is positioned adjacent a first end (160) of the shaft (134) and said receiver (168) is positioned adjacent an opposing, second end (162) of the shaft.
